(19) Europäisches Patentamt

European Patent Office

Office européen des brevets

(11) **EP 2 360 414 A1**

(12) **EUROPEAN PATENT APPLICATION**

(43) Date of publication:
**24.08.2011 Bulletin 2011/34**

(51) Int Cl.:
**F16L 55/28** *(2006.01)*   **G21C 17/017** *(2006.01)*

(21) Application number: **11154494.6**

(22) Date of filing: **15.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.02.2010 JP 2010030553**

(71) Applicant: **Kabushiki Kaisha Toshiba**
**Tokyo 105-8001 (JP)**

(72) Inventors:
• **Okada, Satoshi**
**Tokyo 105-8001 (JP)**
• **Tamura, Masataka**
**Tokyo 105-8001 (JP)**
• **Kobayashi, Taiji**
**Tokyo 105-8001 (JP)**
• **Yoda, Masaki**
**Tokyo 105-8001 (JP)**

(74) Representative: **HOFFMANN EITLE**
**Patent- und Rechtsanwälte**
**Arabellastraße 4**
**81925 München (DE)**

(54) **In-pipe work device**

(57)   According to an embodiment, an in-pipe work device is inserted into a pipe and remotely controlled by a control device to perform an operation for an inner surface of the pipe. The in-pipe work device has: a main unit (5); a main-unit support unit (4); a rotation arm (9);; a process head (7); a first distance sensor; and a process head position adjustment mechanism (85) that changes a distance from a rotation center of the rotation arm to the process head. The control device makes the process head position adjustment mechanism expand and contract based upon a result of measurement by the first distance sensor and operation condition information that is input in advance.

FIG.1A

**Description**

FIELD

Embodiments described herein relate to an in-pipe work device that is disposed in a pipe and conducts inspection, repairing and other works for an inner surface of the pipe.

BACKGROUND

When inspection, process and other works are conducted for an inner surface of a lateral or horizontal pipe in an environment that people have difficulty getting into, an in-pipe work device is sent by remote control into the pipe where the in-pipe work device conducts operations for the inner surface of the pipe. In particular, for example, when high-precision operations are required in an environment such as a nuclear reactor pressure vessel whose interior is complicated and confined, skilled workers and enormous man-hours are necessary. For example, a conventional operation of installing an in-pipe work device in a lateral pipe involves lifting the in-pipe work device down using a large crane or hoist to transfer the in-pipe work device to an inlet of the pipe before disposing the in-pipe work device in the pipe using a mechanism that sends the in-pipe work device in a horizontal direction. Therefore, large equipment is needed to transfer the in-pipe work device to the inlet of the pipe as well as to send the in-pipe work device into the pipe.

As for such an in-pipe work device, there is a device that rotates a processing head inside the lateral pipe to conduct inspection and processes in a circumferential direction of the inner surface of the pipe. For example, what is disclosed in Jpn. Pat. Appln. Laid-open Publication No. 11-304985 is a device that rotates a laser emission unit along an internal circumference of the pipe using a rotation motor to irradiate the entire circumference of a welded part of the pipe with the laser beam and performs surface solution heat treatment. The device also includes three support arms, each of which has a roller on a tip of the arm. The support arms are expanded by the same distance and pushed against the inner surface of the pipe so that the device is supported at the center of the axis of the pipe.

As described above, when inspection and processes are carried out for the inner surface of the lateral pipe in a complicated and confined environment, skilled workers and enormous man-hours have been needed for the device to be installed by remote control.

The use of the device designed to rotate an operation head that the in-pipe work device includes and perform inspections and operations in the circumferential direction of the pipe involves the following: before the operation head is positioned, the in-pipe work device is moved to the location where the operation head reaches an operation site. However, in many cases, the shape and inner surface of the pipe, on which operations are conducted, are significantly different from what has been designed. Particularly in a pipe where a welded part exists, there are rugged portions on the inner surface of the pipe due to weld beads. When operations are conducted with the rotating operation head in the circumferential direction of the pipe, it is necessary to keep a constant distance between the operation head and the inner surface of the pipe for precise positioning.

If there are rugged portions on the inner surface of the pipe, it is necessary to make corrections appropriately in order to keep a distance between a process-applied surface and the operation head within a tolerance of an operation condition when the operation head is rotating.

However, as the in-pipe work device becomes larger and more complicated, it is more difficult to install the in-pipe work device and monitor how operations go on, requiring more skilled workers and man-hours.

Moreover, when operations are conducted for the inner surface of a pipe that has been installed in an actual plant and is in operation, there are restrictions, including a distance between a control area for remote operation and a work site, a work atmosphere (underwater, a gas-filled area or the like), effects on peripheral devices, and the like.

BRIEF DESCRIPTION OF THE DRAWING

The above and other features and advantages of the present invention will become apparent from the discussion hereinbelow of specific, illustrative embodiments thereof presented in conjunction with the accompanying drawings, in which:

FIG. 1A is a front view of a processing device 3 according to the first embodiment of the present invention when viewed in an axial direction of a nozzle stub 2, and FIG. 1B is an arrow cross-sectional view taken along line A-A shown in FIG. 1A;

FIG. 2 is a flowchart showing a process ranging from the installation of the processing device 3 in a processing location to a laser welding process by the processing device 3;

FIG. 3 is a perspective view outlining a lifting device 22 and a device insertion jig 23 in the first embodiment

FIG. 4 is a perspective view illustrating an operation of installing the processing device 3 using the lifting device 22;

FIG. 5A is a lateral view showing a situation before the processing device 3 is held by the lifting device 22, and FIG. 5B is a lateral view showing a situation where the processing device 3 is held by the lifting device 22;

FIG. 6 is a lateral view showing the processing device 3 that is inserted into the nozzle stub 2 by the lifting device 22;

FIG. 7A is a front view of a support leg 4 when viewed in an axial direction of the nozzle stub 2, and FIG. 7B is a front view of the support leg 4 when viewed in a direction perpendicular to the axial direction of the nozzle stub 2;

FIG. 8A is a front view illustrating a motion mode of the processing device 3, and FIG. 8B is a front view illustrating a fixed mode of the processing device 3;

FIG. 9 is a conceptual diagram showing, in a simplified way, a situation where a rotation axis of a rotation arm 9 is positioned away from the center of the nozzle stub 2;

FIG. 10 is a graph showing a relationship between a distance from a distance sensor 8 to the inner surface of the nozzle stub 2 and a rotation angle of the rotation arm;

FIG. 11 is a conceptual diagram showing support-leg axes 54a, 54b and 54c before and after corrections are made to a rotation axis 52;

FIG. 12A is an enlarged view of essential portions around a processing head 7 when viewed in the axial direction of the nozzle stub 2, and FIG. 12B is an enlarged view of essential portions when viewed in a direction perpendicular to the axial direction of the nozzle stub 2;

FIG. 13 is an enlarged view of essential portions in the vicinity of the processing head 7 in the second embodiment when viewed in the axial direction of the nozzle stub 2;

FIG. 14 is a flowchart showing a process of adjusting the distance between the processing head 7 and the inner surface of the nozzle stub 2 using distance data detected by a magnetic distance sensor 81;

FIG. 15 is an enlarged view of essential portions in the vicinity of the processing head 7 when viewed in the axial direction of the nozzle stub 2 in the third embodiment; and FIG. 16 is a diagram showing an example of what a state display controller 17 displays in the third embodiment.

DETAILED DESCRIPTION

A problem to be solved by the present invention is to provide an in-pipe work device that accurately adjusts a distance between the inner surface of the pipe and a rotation axis of the operation head with a simple configuration to improve the accuracy of operations.

According to one embodiment, an in-pipe work device that is inserted into a pipe and remotely controlled by a control device to perform an operation for an inner surface of the pipe is provided. The in-pipe work device comprises: a main unit; a main-unit support unit that comes in contact with the pipe to position and fix the main unit in the pipe; a rotation arm that rotates around a rotation axis that is parallel with a long axis of the pipe; an operation head that is attached to the rotation arm to perform processes for the inner surface of the pipe; a first distance sensor that is placed ahead of the operation head in a rotation direction of the rotation arm to measure a distance to the inner surface of the pipe; and an operation head position adjustment mechanism that changes a distance from a rotation center of the rotation arm to the operation head. The control device makes the operation head position adjustment mechanism expand and contract based upon a result of measurement by the first distance sensor and operation condition information that is input in advance.

The following describes embodiments of the present invention with reference to the accompanying drawings.

[FIRST EMBODIMENT]

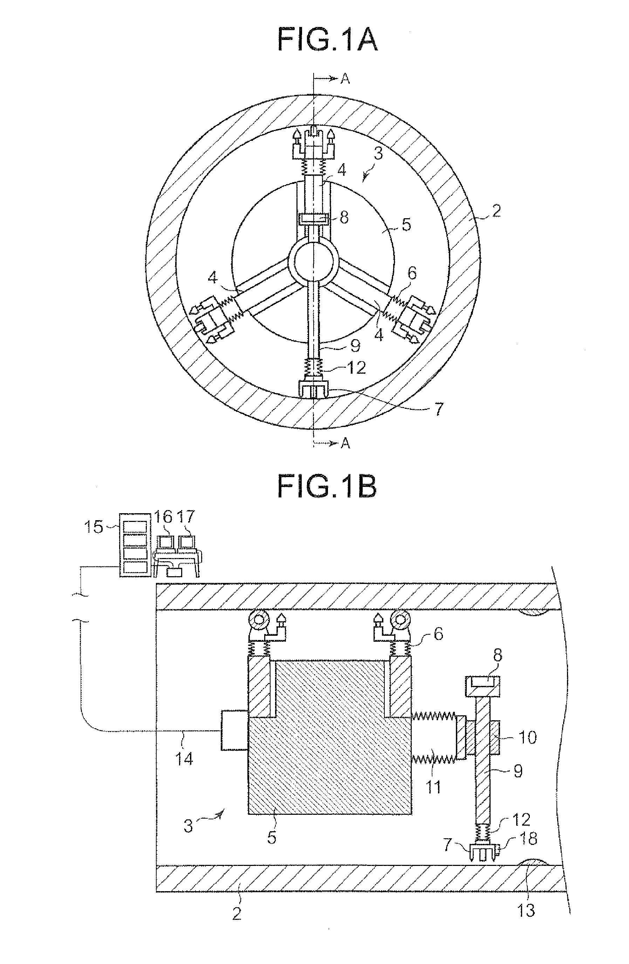

The following describes the first embodiment of the present invention with reference to the drawings. FIGS. 1A and 1B are diagrams showing the configuration of a processing device 3 that conducts repairing and processes on an inner surface of a nozzle stub 2 that is installed in a nuclear reactor pressure vessel 1 as an example of a lateral pipe; the diagrams show the situation where the processing device 3 is put in the nozzle stub 3. FIG. 1A is a front view of the processing device 3 when viewed in an axial direction of the nozzle stub 2. FIG. 1B is an arrow cross-sectional view of the processing device 3 taken along line A-A shown in FIG. 1A; the diagram also shows a control device 15 and the like, which are connected to the processing device 3

In the present embodiment, the processing device 3 is described as a device that performs processes of laser welding to the inner surface of the nozzle stub 2, for example.

With reference to FIGS. 1A and 1B, the following describes the configuration of the processing device 3 as well as a remote control system of the processing device 3.

The processing device 3 is supported by a plurality of support legs 4 that extend in radial directions of the nozzle stub 2. The support legs 4 are disposed partly within grooves that are formed in a main-unit module 5. Each of the support legs 4 is provided with an expansion mechanism unit 6 that expands and contracts the support leg 4. A processing head 7 and a distance sensor (a second distance sensor) 8 are attached to the processing device 3 via a rotation arm 9, a rotation driving mechanism unit 10 and a back-and-forth driving mechanism unit 11. The processing head 7 and the distance sensor 8 are set so as to face the inner surface of the nozzle stub 2 and to face mutually opposite directions. The processing head 7 and the distance sensor 8 are attached to the rotation arm 9, which is rotated by the rotation driving mechanism unit 10. A pivot axis of the rotation arm 9 is in the same direction as the axial direction of the nozzle stub 2. The back-and-forth driving mechanism unit 11 is attached to the rotation driving mechanism unit 10 and moves the rotation driving mechanism unit 10 back and forth with respect to the main unit of the processing device 3. What is installed between the processing head 7 and the rotation arm 9 is a push driving mechanism unit 12 that expands and contracts (or shortens) in the radial direction of the nozzle stub 2 to move the processing head 7. A head unit monitoring camera is attached to the processing head 7 to monitor a portion on which processes are conducted. Welded parts 13 are convex portions formed on the inner surface of the nozzle stub 2.

The processing device 3 is signally connected to the control device 15 placed on an operation floor via a cable 14. The control device 15 is connected to a driving controller 16 and a state display controller 17. The control device 15, the driving controller 16 and the state display controller 17 communicate with each other. The driving controller 16 generates driving control data using a processing request input by an operator and state data of the processing device 3 collected through the control device 15, and inputs a driving control request of the processing device 3 into the control device 15. The state data of the processing device 3 represents, for example, an attitude, a rotation angle of the rotation arm 9, expansion or contraction state of the support legs 4 or of the back-and-forth driving mechanism unit 11, and the like. The state display controlled 17 outputs the state data of the processing device 3, which is collected through the control device 15, and a captured image of a head unit monitoring camera 18. As for the state data, information-processing conversion is performed on the state data that is to be displayed so that it is easy for an operator to know the state of the processing device 3. The control device 15, the driving controller 16 and the state display controller 17 make up a remote control system of the processing device 3.

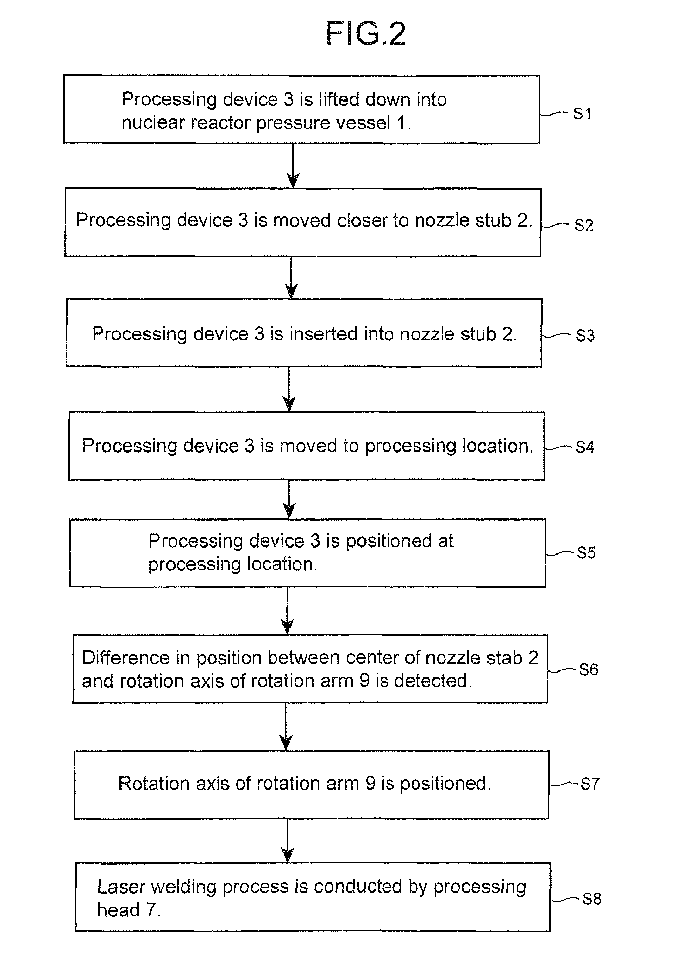

FIG. 2 is a flowchart showing a process of operation by the processing device 3, from the installation of the processing device 3 in a processing location to a laser welding process by the processing device 3.

First, the processing device 3 is put into the nozzle stub 2. That is: the processing device 3 is lifted down from outside the nuclear reactor pressure vessel (RPV) 1 (Step S1); the processing device 3 is moved closer to the nozzle stub 2 (Step S2); and the processing device 3 is inserted into the nozzle stub 2 from the nozzle stub 2 (Step S3).

Then, a process of positioning the processing device 3 in the processing location in the nozzle stub 2 is performed. That is: the processing device 3 is made move in the nozzle stub 2 to the processing location (Step S4); and the position of the processing device 3 is fixed so that the processing device 3 is positioned at the processing location (Step S5).

Finally, a rotation axis of the rotation arm 9 is positioned on the center of the nozzle stub 2 and a laser welding process is performed. First, the distance sensor 8 attached to the rotation arm 9 detects a difference in position between the center of the nozzle stub 2 and the rotation axis of the rotation arm 9 (Step S6). Based on the detected positional difference, the lengths of the support legs 4 are adjusted so that the rotation axis of the rotation arm 9 comes to the center of the nozzle stub 2 (Step S7). After the positioning of the rotation arm 9 is completed, a laser welding process is carried out by the processing head 7 (Step S8).

Each of the above steps shown in FIG. 2 will be described in detail with reference to each of the drawings.

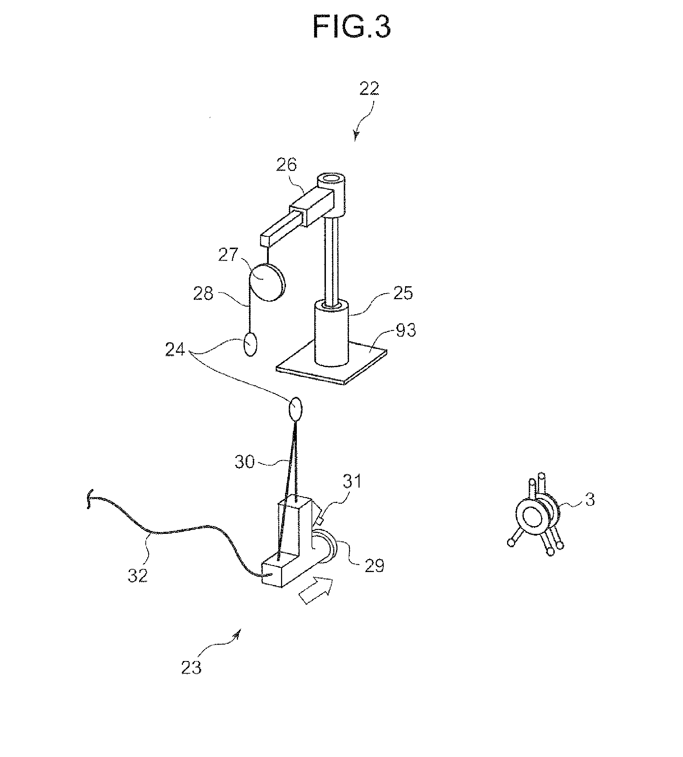

First, the configuration of devices that put the device 3 into the nozzle stub 2 will be described with reference to FIG. 3.

FIG. 3 is a perspective view outlining a lifting device 22 and a device insertion jig 23 that are used to put the processing device 3 into the nozzle stub 2.

The lifting device 22 is a kind of crane and is attached to a rotation mechanism 25 placed on the operation floor. The lifting device 22 includes a rotation mechanism installed on the operation floor 93; an expansion arm 26 which is attached to and rotated by the rotation mechanism 25; a wire reel 27 which hangs from a tip of the expansion arm 26; and a lifting wire 28 which is paid out from the wire reel 27. The device insertion jig 23 includes: a device holding jig 29 which holds the processing device 3; a jig-side lifting wire 30 which is to be connected to the lifting wire 28; a jig monitoring camera 31 which monitors how the processing device 3 is inserted into the nozzle stub 2; and a guide cable 32 which is used both for signal communication of the jig monitoring camera 31 and for a direction-adjustment guide of the device insertion jig 23. There are a pair of wire connectors 24, one of which is attached to a tip of the lifting wire 28 and the other to a tip of the jig-side lifting wire 30. After the wire connectors 24 are connected together, the device insertion jig 23 hangs from the lifting device 22. The cable 14 is not shown in this diagram.

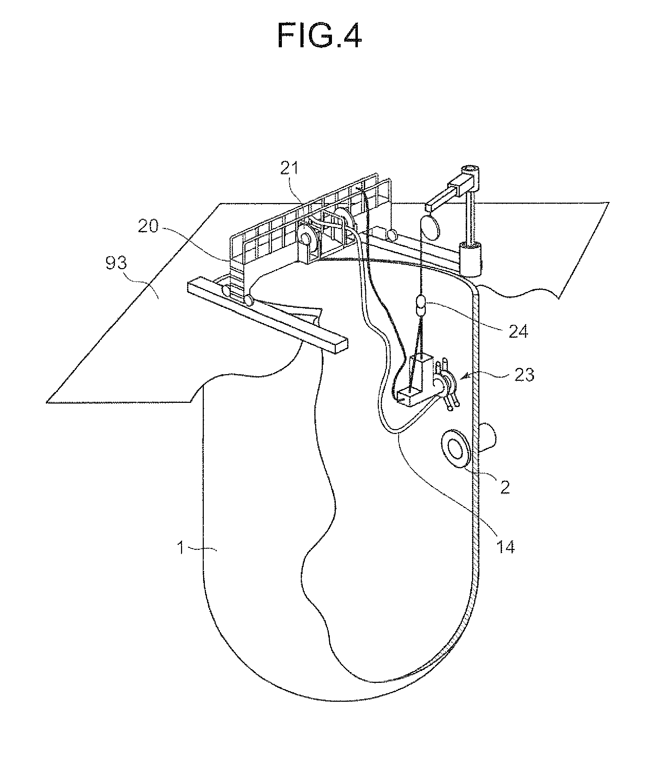

The following describes the installation of the processing device 3 with the use of the lifting device 22 and the device insertion jig 23 with reference to FIGS. 4, 5 and 6 (Steps S1 to S3 in FIG. 2). FIG. 4 is a perspective view illustrating an operation of installing the processing device 3.

As shown in FIG. 4, an operation truck 20 and the lifting device 22 are placed on an operation floor 93. The lifting device 22 lifts the device insertion jig 23 holding the processing device 3 down into the nuclear reactor pressure vessel 1. On the operation truck 20, there is a cable supply device 21 that leads cables extending into the nuclear reactor pressure vessel 1. The cable 14 of the processing device 3 and the guide cable 32 of the device insertion jig are led by the cable supply device 21.

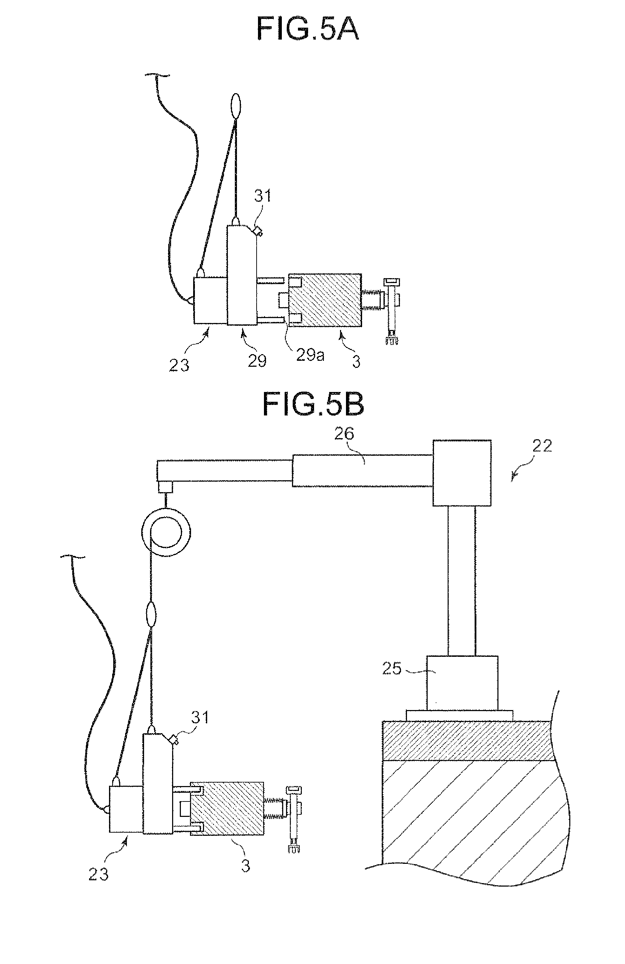

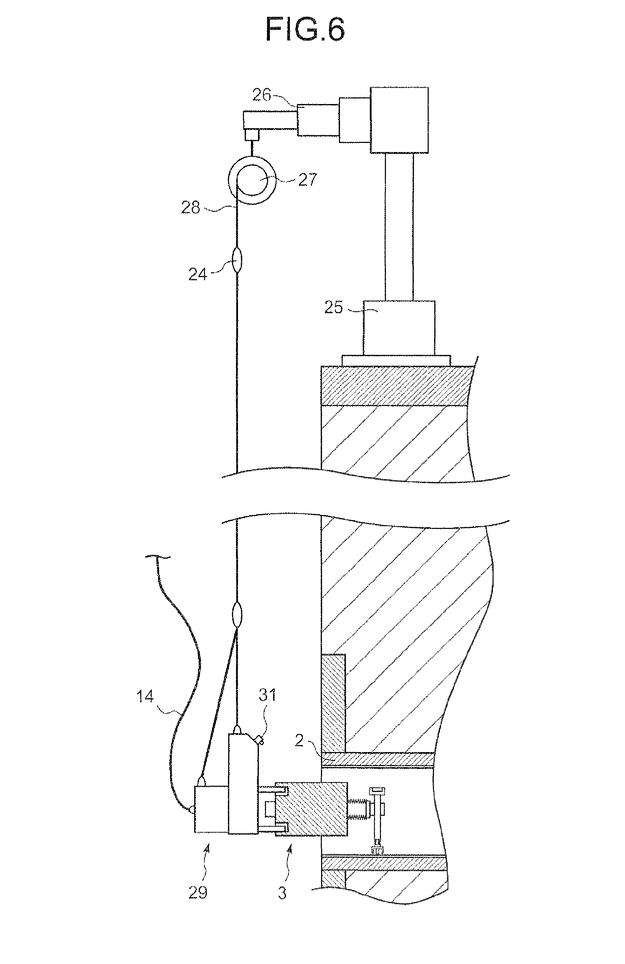

A process of installing the processing device 3 will be described in detail with reference to FIGS. 5 and 6. FIGS. 5A, 5B and 6 are lateral views illustrating a process of installing the processing device 3, where the longitudinal section of the processing device 3 is shown as in the case of FIG. 1B. Some portions of the structure, such as the support legs of the processing device 3, are not shown in these diagrams.

First, as shown in FIG. 5A, the device insertion jig 23 holds the processing device 3. The processing device 3 is held in the following manner: projecting portions 29a of the device holding jig 29 are inserted into a concave portion provided in the main-unit module 5, and the projecting portions 29a are widened outward and pushed against the inner wall of the concave portion of the main-unit module 5. Then, as shown in FIG. 5B, the lifting device 22 lifts down the device holding jig 29 holding the processing device 3 (Step S1 in FIG. 2).

Alternatively, if the attitude of the processing device 3 can be kept horizontal, a different method may be used to hold the processing device 3. For example, the following methods may available: a method of attaching male and female members to the device holding jig 29 and the processing device 3 so that the device holding jig 29 and the processing device 3 engage with each other, and a method of pushing convex portions of the processing device 3 from outside to hold. As for the attitude of the processing device 3, all that is required is for the attitude of the processing device 3 to be kept horizontal just before the processing device 3 is inserted into the nozzle stub 2. For example, the following is possible: the attitude of the processing device 3 is kept vertical while the processing device 3 is being lifted down; after the processing device 3 comes closer to the nozzle stub 2, the attitude of the processing device 3 is then turned to become horizontal. This method is effective when the vertical attitude of the processing device 3 is advantageous in moving the processing device 3 inside the nuclear reactor pressure vessel 1 which is a complicated and confined space.

The following describes how to insert the processing device 3 into the nozzle stub 2 with reference to FIG. 6. The processing device 3 hanging from the lifting device 22 moves closer to the nozzle stub 2 as the lifting device 22 rotates, the expansion arm 26 expands or contracts and the wire reel 27 pays out the lifting wire 28 (Step S2 in FIG. 2).

Watching an image of the jig monitoring camera 31, an operator accurately positions the processing device 3 in front of the entrance of the nozzle stub 2. After the positioning of the processing device 3 is completed, the expansion arm 26 is further contracted, thereby inserting the processing device 3 into the nozzle stub 2 (Step S3 in FIG. 2). If a location where the processing device 3 is installed is far away from the nozzle stub 2, the projecting portions 29a of the device holding jig 29 can be replaced with expansion arms or with other structures so that it is easy to insert the processing device 3 deep into the nozzle stub 2.

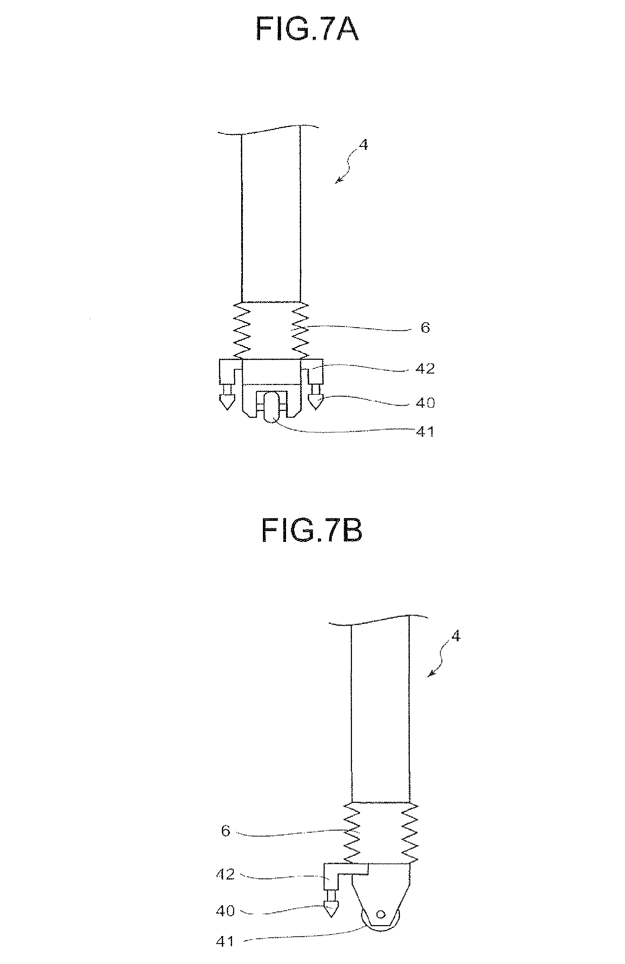

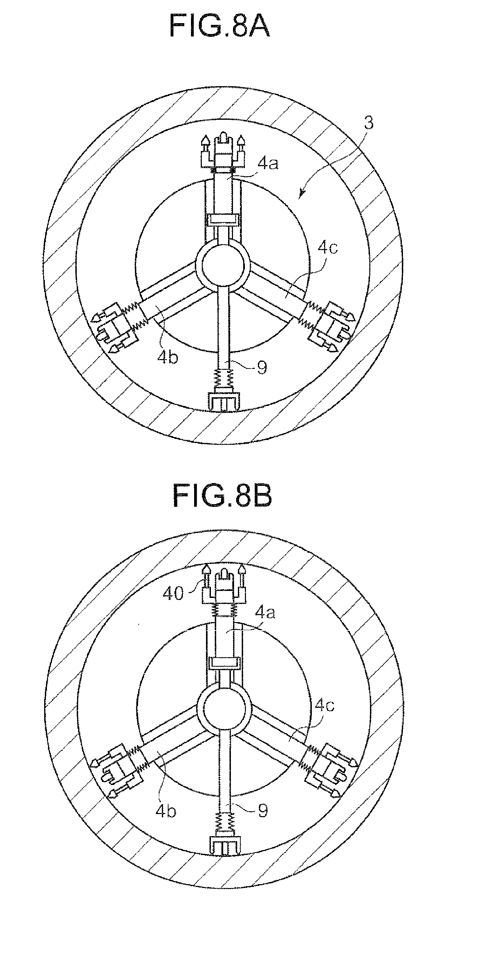

The following explains how to position the processing device 3, which is inserted into the nozzle stub 2, at the processing location, with reference to FIGS. 7 and 8 (Steps S4 and S5 in FIG. 2).

First, the detailed configuration of the support legs 4 of the processing device 3 will be described with reference to FIGS. 7A and 7B. FIGS 7A and 7B are enlarged views of essential portions, showing the configuration of each of the support legs 4. FIG. 7A is a front view, viewed in the axial direction of the nozzle stub 2. FIG. 7B is a lateral view, viewed in a direction perpendicular to the axial direction of the nozzle stub 2.

As described above, the support legs 4 are provided with the expansion mechanism units 6. The expansion mechanism units 6 make the support legs 4 expand or contract in length. The following are provided at the tips of the support legs 4: fixing jigs 40 which come in contact with the internal surface of the nozzle stub 2, and mobile wheels 41. The fixing jigs 40 are provided at the tips of the support legs 4 via pushing mechanisms 42. The pushing mechanisms 42 expand or contract in the same directions as the axes of the support legs 4 to push the fixing jigs 40 against the inner surface of the nozzle stub 2. The expanding and contracting of the pushing mechanisms 42 are independent of the mobile wheels 41. The mobile wheels 41 are provided at the tips of the support legs 4 via springs which are not shown. The mobile wheels 41 are driven by wheel driving mechanisms. Each of the wheel driving mechanism may include a built-in motor which is positioned around the tip of the support leg 4, and a timing belt which transfers the power of the motor to the mobile wheel 41.

With the pushing mechanisms 42 and the wheel driving mechanisms mentioned above, the processing device 3 shifts between a motion mode and a fixed mode; the processing device 3 moves to the processing location where the processing device 3 is positioned and fixed. The following provides a detailed description thereof with reference to FIGS. 8A and 8B. FIG. 8A is a front view illustrating the motion mode of the processing device 3. FIG. 8B is a front view illustrating the fixed mode of the processing device 3.

In the motion mode shown in FIG. 8A, the pushing mechanisms 42 do not push the fixing jigs 40 against the inner surface of the nozzle stub 2. In addition, the expansion mechanism units 6 remain contracted. Of the support legs 4a, 4b and 4c extending in three directions, only the mobile wheels 41b and 41c of the support legs 4b and 4c come in contact with the inner surface of the nozzle stub 2. If the wheel driving mechanisms are driven under the circumstances mentioned above, the processing device 3 moves in the nozzle stub 2. It is possible for the operator to move the processing device 3 to the processing location by watching the image of the head unit monitoring camera 18 and by controlling the driving of the wheel driving mechanisms (Step S4 in FIG. 2). Alternatively, the processing device 3 may be driven using three mobile wheels with the mobile wheel 41a of the support leg 4a being pushed against the inner surface of the nozzle stub 2 by the expansion mechanism unit 6.

In the fixed mode shown in FIG. 8B, the fixing jigs 40 are pushed against the inner surface of the nozzle stub 2 by the pushing mechanisms 42. As the fixing jigs 40 are pushed against the inner surface of the nozzle stub 2, the mobile wheels 41 move away from the inner surface of the nozzle stub 2. As a result, the position of the processing device 3 is fixed in the nozzle stub 2.

In that manner, the driving of the expansion mechanism units 6, the pushing mechanisms 42 and the wheel driving mechanisms, which are provided on the support legs 4, is controlled, and the processing device 3 therefore shifts between the motion mode and the fixed mode. Thus, it is possible to move the processing device 3 to the processing location for positioning (Step S5 in FIG. 2).

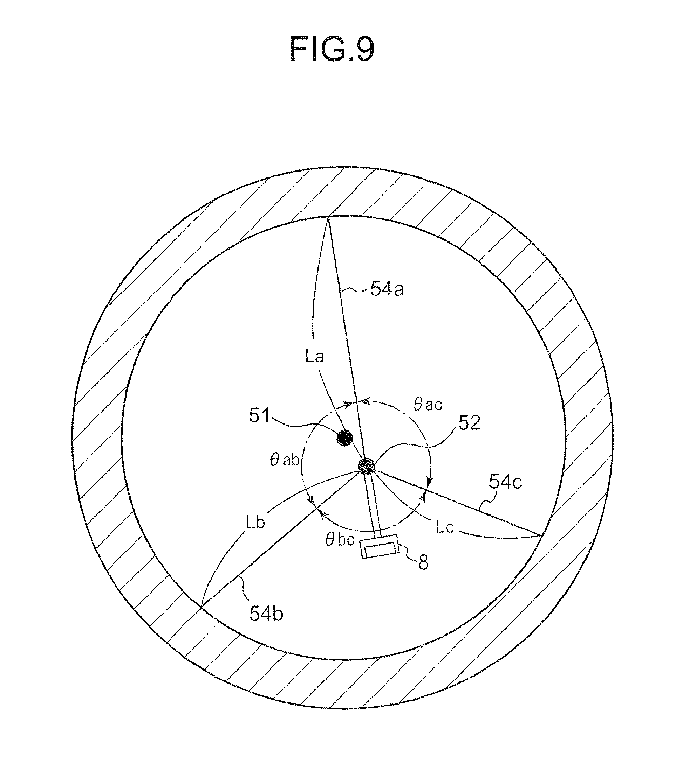

The following describes a process of positioning the rotation axis of the rotation arm 9 at the center of the nozzle stub 2 with reference to FIGS. 9, 10 and 11 (Steps S6 and S7 in FIG. 2).

First, a process of detecting a difference in position between the center of the nozzle stub 2 and the rotation axis of the rotation arm 9 will be described with reference to FIG. 9 (Step S6 in FIG. 2). FIG. 9 is a conceptual diagram showing, in a simplified way, the situation where the rotation axis of the rotation arm 9 is positioned away from the center of the nozzle stub 2.

The rotation axis 52 of the rotation arm 9 is positioned away from the center 51 of the nozzle stub 2. The processing device 3 is in the fixed mode, which is illustrated in FIG. 8B. The support legs 4 are in contact with the inner surface of the nozzle stub 2. In FIG. 9, the lines connecting the contact points of the support legs 4 with the inner surface of the nozzle stub 2 to the rotation axis 52 are represented in the diagram as support-leg axes 54a, 54b and 54c. The support-leg axes 54a, 54b and 54c correspond to the support legs 4a, 4b and 4c, respectively. The support-leg axes 54a, 54b and 54c are La, Lb and Lc in length, respectively. The distance between the rotation axis 52 and the distance sensor 8 is represented by Ld, and the distance between the distance sensor 8 and the inner surface of the nozzle stub 2 by Lmi. Therefore, the distance between the inner surface of the nozzle stub 2 and the rotation axis 52 is Ld + Lmi. The angle between the support-leg axes 54a and 54b is represented by $\theta ab$, the angle between the support-leg axes 54b and 54c by $\theta bc$, and the angle between the support-leg axes 54a and 54c by $\theta ac$. The support legs 4a, 4b and 4c are placed at regular intervals. In the case of FIG. 9, $\theta ab$, $\theta be$ and $\theta ac$ are all 120 degrees. Alternatively, the support legs may not be placed at regular intervals, and the support legs may be placed arbitrarily.

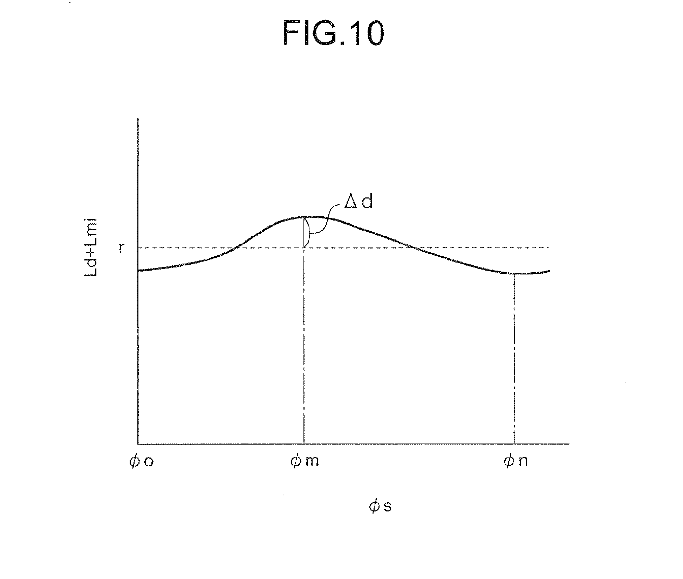

As for the difference in position between the center of the nozzle stub 2 and the rotation axis of the rotation arm 9, (Ld + Lmi) is measured by the distance sensor 8 while the rotation arm 9 is rotated one revolution. Therefore, it is possible to detect the direction and distance of the positional difference. The following provides a detailed description thereof with reference to FIG. 10. FIG. 10 is a graph outlining the results of measurement by the distance sensor 8 when the rotation arm 9 makes one revolution. The x-axis represents the rotation angle $\varphi s$ of the rotation arm 9, with the initial position $\varphi_0 = 0$ degree. The y-axis represents the distance, Ld + Lmi, between the rotation axis 52 and the inner surface of the nozzle stub 2. The radius r of the nozzle stub 2 is indicated by a dotted line.

FIG. 10 shows the results of measurement for the rotation arm 9 that is rotated one revolution clockwise, with the position of the distance sensor 8, shown in FIG. 9, set at $\varphi_0$. Incidentally, the angle of the rotation arm shown in FIG. 9 is opposite to the direction of the support-leg axis 54a, so that the angles are different by 180 degrees. Since the rotation axis 52 is closer to the inner surface of the nozzle stub 2 than the center 51 is in the $\varphi_0$ direction, Ld + Lmi is smaller than radius r. As $\varphi s$ increases, Ld + Lmi also increases, peaking at $\varphi m$. At $\varphi m$, the rotation arm 9 overlaps on the center 51. As $\varphi s$ increases further, Ld + Lmi decreases. Finally, at $\varphi s = 360$ degrees, Ld + Lmi becomes the same value as at $\varphi s = 0$ degree, and the measurement ends. The difference between Ld + Lmi and radius r at $\varphi m$ is represented by $\Delta d$.

The direction of the positional difference of the center 51 relative to the rotation axis 52 is $\varphi m$, which is obtained by the measurement described above. The magnitude of the positional difference between the center 51 and the rotation axis 52 is $\Delta d$. Angles such as $\varphi m$ are based on the initial position of the rotation arm 9.

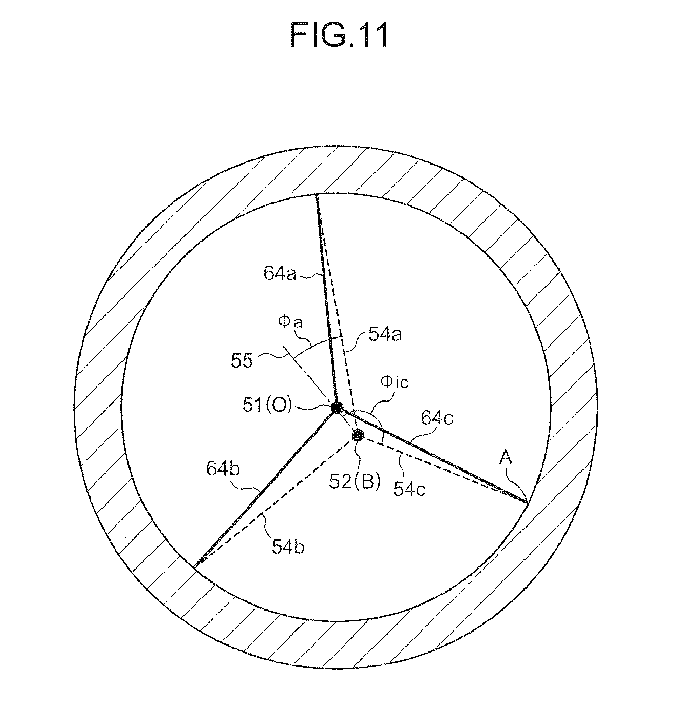

The following describes an example of how to correct the position of the rotation axis 52 with reference to FIG. 11. The position of the rotation axis 52 can be changed by expanding and contracting the support legs 4a, 4b and 4c, with the contact points of the support legs 4a, 4b and 4c with the inner surface of the nozzle stub 2 being unmoved. The following explains in detail how to calculate the length of each of the support legs 4a, 4b and 4c after corrections are made to the rotation axis 52.

FIG. 11 is a conceptual diagram showing the support-leg axes 54a, 54b and 54c before and after corrections are made to the rotation axis 52. The dotted lines represent the support-leg axes 54a, 54b and 54c before corrections are made. The solid lines represent the support-leg axes after the corrections are made. Hereinafter, after the corrections are made, the support-leg axes are referred to as "corrected support-leg axes 64a, 64b and 64c." A line connecting the center 51 and the rotation axis 52, before the corrections are made, is represented by a single-dot chain line as a difference direction 55. Suppose that the corrected support-leg axes 64a, 64b and 64c are La + $\Delta a$, Lb + $\Delta b$ and Lc + $\Delta c$ in length, respectively.

The length of the support legs 4a, 4b and 4c, after the rotation axis 52 is corrected, is determined by calculating the length of the corrected support-leg axes 64a, 64b and 64c, i.e. La + $\Delta$a, Lb + $\Delta$b and Lc + $\Delta$c. The following provides a detailed description of how to calculate Lc + $\Delta$c, the length of the corrected support-leg axis 64c, among the corrected support-leg axes 64a, 64b and 64c.

Suppose that in FIG. 11 the contact point of the support leg 4c with the inner surface of the nozzle stub 2 is point A, the location of the uncorrected rotation axis 52 point B, and the center 51 of the nozzle stub 2 point O. In this case, it is possible to calculate the length of the corrected support-leg axis 64c, Lc + $\Delta$c, by focusing on a triangle made by three points A, B and 0. Segment AO is Lc + $\Delta$c in length. Segment AB is Lc in length. Segment BO is $\Delta$d in length. Angle OBA is $\varphi$ic, which is shown in FIG. 11 and is the angle between the difference direction 55 and the support-leg axis 54c. $\varphi$ic is calculated by the following equation (1).

$$\varphi ic = \varphi a + 120 \quad \cdots (1)$$

where $\varphi$a is the angle between the support leg 4a and the difference direction 55 as shown in FIG. 11. It is possible to calculate $\varphi$a from the initial position of the distance sensor 8, the position of the uncorrected support leg 4a, and the measured $\varphi$m.

Based on the information described above, the square of (Lc + $\Delta$c), i.e. the square of the length of segment AO, is calculated by the following equation (2) because of the second law of cosines.

$$(Lc + \Delta c)^2 = Lc^2 + \Delta d^2 \cdot 2 \, Lc \times \Delta d \times |\cos(\varphi ic)| \quad \cdots (2)$$

Each parameter in the right side of equation (2) is already known as described above. Therefore, it is possible to calculate the length of the corrected support-leg axis 64c based upon equation (2). It is also possible to calculate La + $\Delta$a and Lb + $\Delta$b from the angles and length that are already known in a similar way.

As described above, the length of the support legs 4a, 4b and 4c is adjusted based on the calculated length of the corrected support-leg axes 64a, 64b and 64c. In this manner, corrections are made so that the rotation axis 52 comes to the position of the center 51 (Step S7 in FIG. 2).

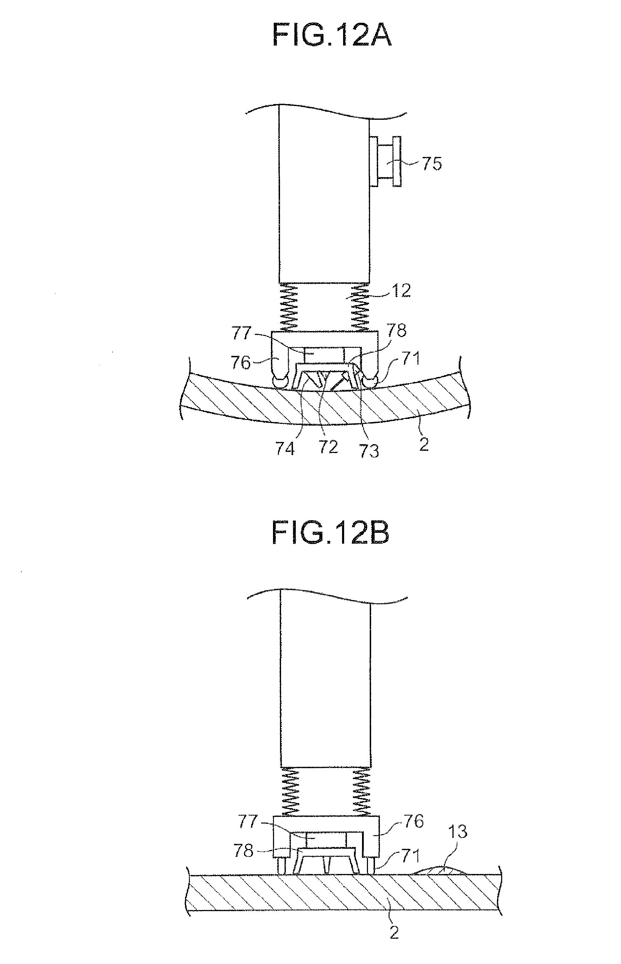

The following describes the laser welding process by the processing head 7 for the inner surface of the nozzle stub 2 with reference to FIGS. 12A and 12B (Step S8 in FIG. 2).

FIGS. 12A and 12B are enlarged views of essential portions around the processing head 7. FIG. 12A is a diagram showing the front side of the processing device 3, i.e. the side viewed in the axial direction of the nozzle stub 2. FIG. 12B is a diagram when viewed in a direction perpendicular to the axis of the nozzle stub 2. The following provides a detailed description of the configuration of the processing head 7.

The processing head 7 is attached to the tip of the rotation arm 9 through the push driving mechanism unit 12. The processing head 7 includes: a roller holding unit 76 which holds scanning guide rollers 71; a cover 78 which is attached to the tip side through an elastic body 77; a welding nozzle 72 which is attached to the inner side of the cover; a filler supply nozzle 73; and a cover gas nozzle 74. An optical fiber (not shown) is connected to the welding nozzle 72 to transfer a laser beam. A hose (not shown) is connected to the cover gas nozzle 74 to supply gas. A filler drum 75 is attached to the rotation arm 9 and supplies filler (not shown) to the filler supply nozzle 73. In both the cases of FIGS. 12A and 12B, the traveling direction of the processing head 7 during a process of operation is from left to right on the paper. A process of operation is performed as the processing head 7 draws a spiral trajectory on the inner surface of the nozzle stub 2.

The following describes the process of operation performed by the processing head 7. After the position of the rotation axis 52 is corrected, the rotation arm 9 is rotated so that the rotation arm 9 comes to a process start position. Then, the processing head 7 is moved in the axial direction of the nozzle stub 2 by the back-and-forth driving mechanism unit 11 illustrated in FIG. 1 in such a way that the processing head 7 is positioned. After the positioning of the processing head 7 is completed, the laser welding process starts. A cover gas atmosphere is created as a cover gas is supplied from a cover gas nozzle into the space within the cover 77; welding is carried out as a laser beam is emitted from the welding nozzle 72. The processing head 7 moves counterclockwise in FIG. 12A, with the help of the rotation arm. The processing head 7 then moves rightward in FIG. 12B, with the help of the back-and-forth driving mechanism unit 11 so as to draw a spiral trajectory. As the process of operation goes on, the processing head 7 moves rightward in FIG. 12B, and then runs onto the welded part 13.

As described above, according to the processing device 3 of the present embodiment, even if the shape of the inner surface of the nozzle stub 2 is different from what has been designed, it is possible to highly accurately perform the laser welding process to the inner surface of the nozzle stub 2 by measuring the inner surface of the nozzle stub 2 and correcting the difference between the rotation axis 52 and the center 51 after the processing device 3 is installed in the nozzle stub 2, on which the process of operation is conducted.

In the present embodiment described above, the laser welding process is performed by the processing head 7. However, for any operation in which the distance between the processing head 7 and the inner surface of the nozzle stub 2 affects the accuracy of processes, the present invention helps to improve the accuracy. For example, instead of the processing head 7, an operation head for laser peening, ultrasonic flaw detection, surface polishing or the like may be used.

As for the process of correcting the difference in position of the rotation axis 52, the calculation method described in the present embodiment is one example. Alternatively, it may be also possible to use a calculation method depending on the configuration of the processing device 3 or the way the distance sensor 8 measures the positional difference. For example, in the present embodiment, the contact points of the support legs 4a, 4b and 4c with the inner surface of the nozzle stub 2 are held unmoved and corrections are made only by expanding and contracting the support legs 4a, 4b and 4c as described above. However, alternatively, the following structures may be also possible: a structure in which mechanisms that move in the circumferential direction of the nozzle stub 2 is provided on the tips of the support legs 4a, 4b and 4c and corrections are made while the angles between the support legs 4a, 4b and 4c are kept unchanged; a structure in which sensors are mounted to measure the angles between the support legs 4a, 4b and 4c and the angles between the support legs 4a, 4b and 4c can be adjusted. Then, a correction process or calculation method suitable for each of the structures described above may be adopted. For example, for the structure in which corrections are made while the angles between the support legs 4a, 4b and 4c are kept unchanged, the following processes may be possible: after the center 51 is calculated, the entire processing device 3 is rotated so that one of the support legs 4a, 4b and 4c is on the difference direction 55; if the support leg 4a is put on the difference direction 55, the support leg 4a is expanded while the support legs 4b and 4c are contracted by the same amount; and corrections are made so that the rotation axis 52 moves along the difference direction 55 to the center 51. For example, such a process is possible when the support legs 4a, 4b and 4c have the flexibility to move slightly in the circumferential direction because the support legs 4a, 4b and 4c are fixed on the processing device 3 through elastic bodies such as spring or rubber.

In the present embodiment, the processing head 7 is continuously rotated while the processing device 3 moves axially, and the process of operation is conducted while the processing head 7 draws a spiral trajectory as described above. However, the process of operation can alternatively be performed by repeating the following operation: an operation in which the rotation arm 9 is rotated one revolution while the processing device 3 remains unmoved axially and then the processing device 3 moves axially after the processing head 7 is rotated one revolution.

When the process of operation is performed with the processing head 7 drawing a spiral trajectory, a slip ring is adopted for the rotation driving mechanism unit 10 in order to prevent kinks in cables such as that of the distance sensor 8 as the rotation arm 9 is continuously rotated in the same direction. Therefore, it is possible to continuously perform the process of operation using the processing head 7 and therefore reduce the time required for the process of operation.

When the process of operation is conducted by alternately performing the process of rotating the rotation arm 9 and the process of moving the processing device 3, the rotation direction of the rotation arm 9 is controlled in such a way that the rotation direction is reversed every time the rotation arm 9 is rotated one revolution. In this case, a slip ring is not required. Therefore, it is possible to make the configuration of the processing device 3 more simplified.

[SECOND EMBODIMENT]

The following describes the second embodiment of the present invention with reference to the drawings. The same components as those in the first embodiment are denoted by the same reference symbols, and repetitive explanation will be omitted.

If there is a rugged area on the inner surface of the nozzle stub 2 due to the accuracy of manufacturing, aging degradation or the like, the distance between the processing head 7 and the inner surface of the nozzle stub 2 varies during the process of operation. The device and method described in the first embodiment are highly accurate by correcting the rotation axis 52 in such a way that the rotation axis 52 comes to the center 51 of the nozzle stub 2, as well as particularly effective for the case where the tolerance of an process condition, such as the engineer works of laser welding, is small. However, when the fluctuation range is large because of the rugged area on the inner surface of the nozzle stub 2, there may be impact on the quality of the processes even if the rotation axis 52 is corrected.

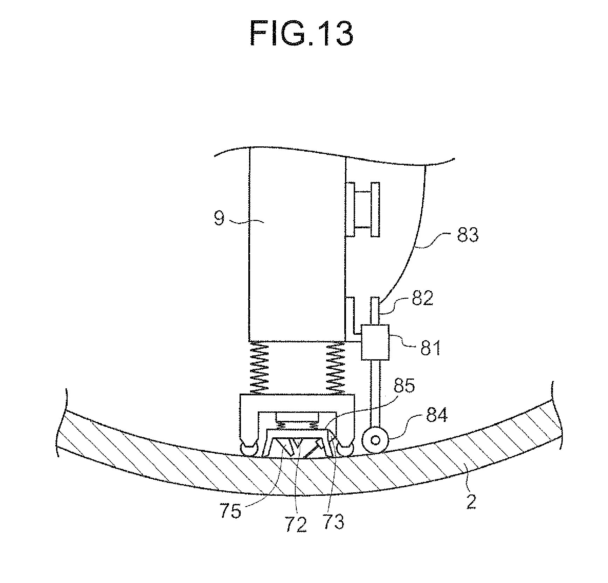

The following describes the configuration of the processing head 7 of the present embodiment with reference to FIG. 13. A magnetic distance sensor (a first distance sensor) 81 is attached to the rotation arm 9. The magnetic distance sensor 81 is designed to measure the position of a core rod 82 that goes up and down, with north-pole and south-pole magnets inserted into the core rod 82. A signal processing device included in the control device 15 transmits an excitation signal through a distance sensor cable 83 and receives a detected induced electromotive force to output distance data. The magnetic distance sensor 81 is attached to the side of the rotation arm 9 that faces the direction in which the processing head 7 travels. A distance sensor roller 84 attached to the tip of the core rod 82 is continuously in contact with the inner surface of the nozzle stub 2. The distance data processed by the signal processing device included in the control device 15 has is transmitted to the driving controller 16 and the state display controller 17. The state display controller 17 displays the distance data detected by the magnetic distance sensor 81 as well as the driving state of the processing device. An operator uses the data for monitoring.

A processing head position adjustment mechanism 85 is provided on the processing head 7. The processing head position adjustment mechanism 85 drives the welding nozzle 72, filler supply nozzle 73 and cover gas nozzle 74 of the processing head 7 up and down in relation to the inner surface of the nozzle stub 2 in response to an instruction from the driving controller 16. Based on the distance data detected by the magnetic distance sensor 81, the processing head position adjustment mechanism 85 is driven. Therefore, it is possible to highly accurately keep the constant distance between the processing head 7 and the inner surface of the nozzle stub 2. If adjustments need to be made beyond a range in which the processing head position adjustment mechanism 85 can make corrections, the push driving mechanism unit 12 is also driven for adjustments.

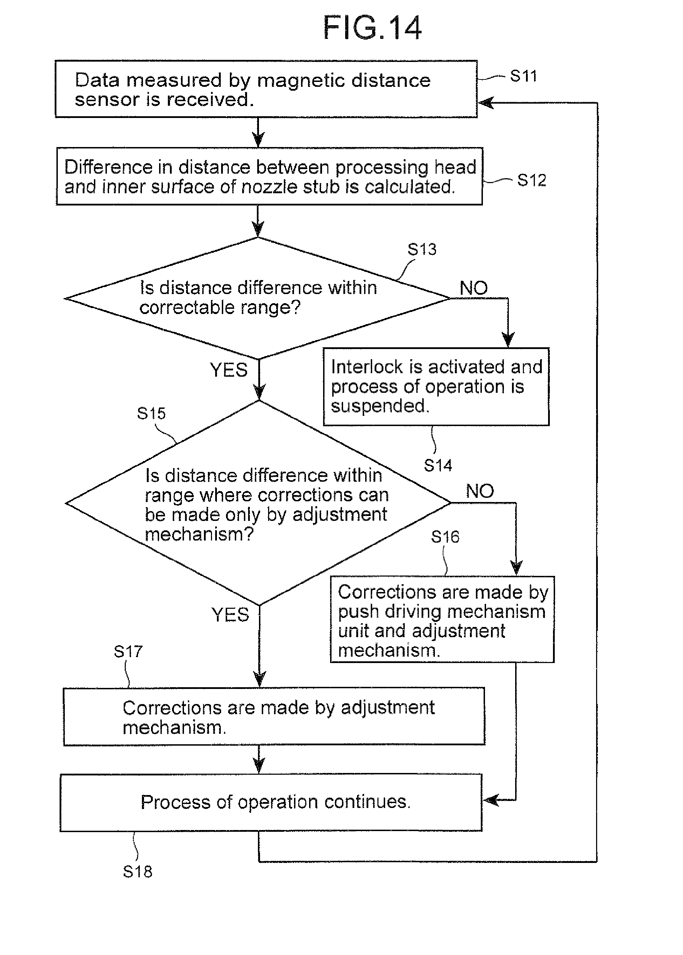

A procedure of the above operation will be described with reference to FIG. 14. FIG. 14 is a flowchart showing a process of adjusting the distance between the processing head 7 and the inner surface of the nozzle stub 2 using the distance data detected by the magnetic distance sensor 81.

At first, the control device 15 receives the distance data detected by the magnetic distance sensor 81 (Step S11 in FIG. 14). Then, the control device 15 calculates the difference in distance between the processing head 7 and the inner surface of the nozzle stub 2 based upon the distance data (Step S12 in FIG. 14). The control device 15 subsequently makes a determination as to whether the distance difference is within a correctable range based upon the calculated distance difference and data concerning the expanding and contracting state of the push driving mechanism unit 12 and the processing head position adjustment mechanism 85 (Step S13 in FIG. 14). When the distance difference is outside the correctable range, an interlock starts to work and the process of operation is suspended (Step S14 in FIG. 14). When the distance difference is within the correctable range, the control device 15 makes a determination as to whether the distance difference is within a range where corrections can be made only by the processing head position adjustment mechanism 85 at that time (Step S15 in FIG. 14). When it is not possible to make corrections only with the processing head position adjustment mechanism 85, the push driving mechanism unit 12 is used in combination with the processing head position adjustment mechanism 85 to make corrections (Step S16 in FIG. 14). When the distance difference is within a range where corrections can be made only by the processing head position adjustment mechanism 85, only the processing head position adjustment mechanism 85 is used to make corrections (Step S17 in FIG. 14). In each case, the process of operation goes on (Step S18 in FIG. 14), and the magnetic distance sensor 81 repeatedly makes detections.

As described above, the magnetic distance sensor 81 is provided ahead of the scanning direction of the processing head 7. With the use of the data concerning the distance between the processing head 7 and the inner surface of the nozzle stub 2, adjustments are appropriately made to the push driving mechanism unit 12 and the processing head position adjustment mechanism 85. Therefore, it is possible to highly accurately keep the constant distance between the processing head unit and the inner surface of the nozzle stub 2. Such a driving control process makes it possible to carry out the process of operation smoothly and continuously even if there is a rugged or distorted area on the inner surface of the nozzle stub 2. When it is difficult to carry out the process of operation properly because of a significantly rugged or distorted area on the inner surface of the nozzle stub 2, an interlock works to suspend the process of operation before the process of operation starts. Therefore, it is possible to prevent troubles or useless operations from happening and improve efficiency.

In the present embodiment, the adjustment of the distance between the processing head unit and the inner surface of the nozzle stub 2 by the processing head position adjustment mechanism 85 or the like has been described on the assumption that the difference in position of the rotation axis of the rotation arm 9 of the first embodiment is corrected. However, it is possible to obtain the above-described advantageous effects associated with the structure including the processing head position adjustment mechanism 85 without correcting the positional difference.

Alternatively, the following operation process may also be possible a process of storing in the control device 15 an adjustable distance range of the processing head position adjustment mechanism 85 as a threshold value, carrying out an operation without correcting the positional difference of the rotation axis of the rotation arm 9, and then suspending the operation when a result of measurement by the magnetic distance sensor 81 exceeds the threshold value to correct the positional difference of the rotation axis of the rotation arm 9. Such an operation process makes it possible to skip the process of correcting the positional difference of the rotation axis of the rotation arm 9 if the distance between the processing head unit and the inner surface of the nozzle stub 2 can be adjusted only by the processing head position adjustment mechanism 85.

The processing head position adjustment mechanism 85 is not limited to the structure described above as long as it is possible to change the distance between the rotation center of the rotation arm 9 and the processing head 7.

[THIRD EMBODIMENT]

The following describes the third embodiment of the present invention with reference to the drawings. The same components as those in the second embodiment are denoted by the same reference symbols, and repetitive explanation will be omitted.

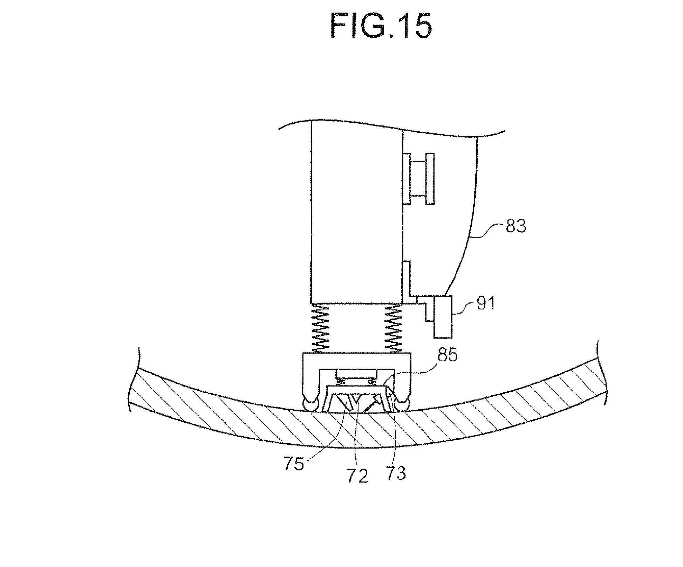

The following describes the configuration of the processing head 7 of the processing device 3 of the present embodiment with reference to FIG. 15. FIG. 15 is an enlarged view of essential portions in the vicinity of the processing head 7 when viewed in the axial direction of the nozzle stub 2. In the present embodiment, instead of the magnetic distance sensor 81 of the second embodiment, a laser distance sensor (a first distance sensor) 91 is attached to the processing head 7. The laser distance sensor 91 emits a laser beam in the vertically downward direction to measure the distance to the inner surface of the nozzle stub 2. The measurement result is transmitted to the control device 15 through the distance sensor cable 83; in a similar way to that in the second embodiment, corrections are made to the processing head 7 in accordance with the procedure shown in FIG. 14.

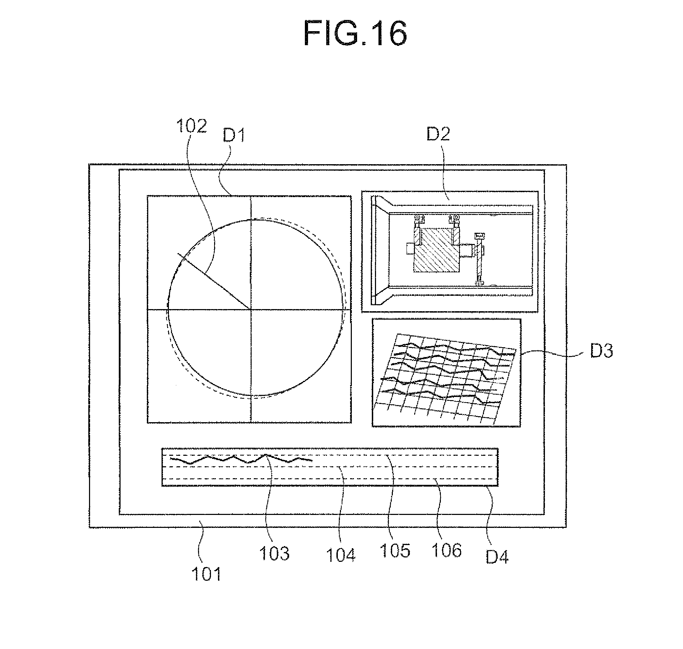

A laser scanner measures the distance by irradiating a wide range with a laser beam. Since the laser scanner is employed for the laser distance sensor 91, it is possible to collect distance data as to a portion that is vertically below the laser distance sensor 91 as well as to the vicinity thereof. With the use of the distance data information collected by laser scanning, it is possible to display three-dimensional graphics of the inner surface of the nozzle stub 2 on the state display controller 17. An example of how graphics are displayed on the state display controller 17 in this case will be described with reference to FIG. 16.

FIG. 16 shows an example of how graphics are displayed on a display 101 of the state display controller 17. The following are laid out: a rotation arm angle display D1, which is positioned at the top left corner of the display 101 and shows the angle of the rotation arm 9 on the inner surface of the nozzle stub 2; a processing device position display D2, which is positioned at the top right corner of the display 101 and shows the position of the processing device 3 in the nozzle stub 2; a pipe inner surface display D3, which is positioned below the processing device position display D2 and shows three-dimensional graphics of the inner surface of the nozzle stub 2 that are drawn based on the distance data obtained by laser scanning of the laser distance sensor 91; and an process condition history display D4, which is positioned at the bottom of the display 101 and shows the process condition tolerance as well as a history record of actual process conditions.

The rotation arm angle display D1 uses segment 102 to show the angle of the rotation arm 9 on the inner surface of the nozzle stub 2, enabling the state of the angle of the rotation arm 9 to be easily checked. The shape of the inner surface of the nozzle stub 2 that is based on design information is displayed with a solid line; the shape of the inner surface of the nozzle stub 2 that is based on the measured distance data is displayed with a dotted line. Therefore, it is easy to know the difference in shape between the actual nozzle stub 2 and the design thereof.

The processing device position display D2 displays the position of the processing device 3 in the nozzle stub 2, enabling the position of the axial direction of the processing device 3 in the nozzle stub 2 to be easily understood. Moreover, the position of a welding line of the nozzle stub 2 is drawn at the same time. Therefore, it is easy to know the position of the processing device 3 relative to the welding line.

As described above, the pipe inner surface display D3 shows three-dimensional graphics of the inner surface of the nozzle stub 2 that are based on the distance data measured by laser scanning of the laser distance sensor 91.

The process condition history display D4 shows the process condition tolerance of the distance between the processing head 7 and the inner surface of the nozzle stub 2 as well as a history record concerning the distance between the processing head 7 and the inner surface of the nozzle stub 2 in the actual process of operation. Dotted line 104 represents a process condition. Dotted lines 105 and 106 represent the plus-and minus-side tolerances of the process condition, respectively. Solid line 103 represents an actual process record. The process history 103 that is within a process condition tolerance range, or the range between the dotted lines 105 and 106, means that the process of operation has been conducted under an appropriate condition. Therefore, it is easy to know that the process of operation by the processing device 3 continues within the condition tolerance range.

As described above, according to the present embodiment, instead of the magnetic distance sensor 81 of the second embodiment, the laser distance sensor 91 is used. Therefore, it is possible to obtain similar advantageous effects to those in the second embodiment. Moreover, a laser scanner is employed for the laser distance sensor 91. Therefore, it is possible to collect the distance data concerning a portion vertically below the laser distance sensor 91 as well as the vicinity thereof. Based on the collected distance data, three-dimensional graphics are displayed to show the inner surface of the nozzle stub 2, making it possible for an operator to easily recognize the state of the inner surface of the nozzle stub 2.

The embodiments of the present invention have been described above with reference to the drawings. It is also possible to form a structure by arbitrarily combining the features of the embodiments described above. It is possible for those skilled in the art to make various modifications and changes in the concrete examples without departing from the technical idea and scope of the present invention. For example, in the embodiments, the device is described as having three support legs. However, the device may have four or more support legs. The support legs may not be arranged equiangularly.

If the process of correcting the positional difference of the rotation axis is not performed but only the process of adjusting the distance between the processing head unit and the inner surface of the nozzle stub 2 is performed by the device including the processing head position adjustment mechanism 85 of the second embodiment, the positioning and fixing of the processing device 3 may not be performed by the support legs 4. In such a case, for example, a special-purpose jig or the like is also available. The jig may be attached to the periphery of the processing device 3 and put in place around the inlet of the nozzle stub as the processing device 3 is inserted into the nozzle stub, thereby positioning and fixing the processing device 3.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An in-pipe work device that is inserted into a pipe and remotely controlled by a control device to perform an operation for an inner surface of the pipe, the in-pipe work device comprising:

   a main unit (5);
   a main-unit support unit (4) that comes in contact with the pipe to position and fix the main unit in the pipe;
   a rotation arm (9) that rotates around a rotation axis that is parallel with a long axis of the pipe;
   a process head (7) that is attached to the rotation arm to perform processes for the inner surface of the pipe;
   a first distance sensor (81) that is placed ahead of the process head in a rotation direction of the rotation arm to measure a distance to the inner surface of the pipe; and
   a process head position adjustment mechanism (85) that changes a distance from a rotation center of the rotation arm to the process head, wherein
   the control device makes the process head position adjustment mechanism expand and contract based upon a result of measurement by the first distance sensor and operation condition information that is input in advance.

2. The in-pipe work device according to claim 1, wherein:

   the main-unit support unit includes a plurality of support legs that come in contact with the pipe and expand and contract in response to a control signal from the control device; and
   the control device includes a function of calculating a positional difference between the rotation axis of the rotation arm and the long axis of the pipe and correcting position of the rotation axis of the rotation arm by making the support legs expand and contract based upon the calculated positional difference.

3. The in-pipe work device according to claims 1 or 2, comprising
   a second distance sensor that is attached to the rotation arm and measures a distance to the inner surface of the pipe, wherein
   the control device includes a function of using the second distance sensor to collect data concerning a distance between the rotation axis of the rotation arm and the inner surface of the pipe, calculating a difference in position between the rotation axis of the rotation arm and the long axis of the pipe based upon the collected distance data, and making corrections so that the rotation axis of the rotation arm is positioned at the center of the pipe.

4. The in-pipe work device according to claim 3, wherein
   the control device calculates the difference in position between the rotation axis of the rotation arm and the long axis of the pipe based upon a relationship between a rotation angle of the rotation arm and the distance data.

5. The in-pipe work device according to any one of claims 1 to 4, wherein
   the first distance censor is a magnetic distance sensor.

6. The in-pipe work device according to any one of claims 1 to 5, wherein:

the first distance sensor is a laser scanner; and

the control device includes an output unit and displays three-dimensional graphics on the output unit based upon a result of scanning by the laser scanner to show the shape of the inner surface of the pipe.

# FIG.1A

# FIG.1B

# FIG.2

Processing device 3 is lifted down into nuclear reactor pressure vessel 1. — S1

↓

Processing device 3 is moved closer to nozzle stub 2. — S2

↓

Processing device 3 is inserted into nozzle stub 2. — S3

↓

Processing device 3 is moved to processing location. — S4

↓

Processing device 3 is positioned at processing location. — S5

↓

Difference in position between center of nozzle stab 2 and rotation axis of rotation arm 9 is detected. — S6

↓

Rotation axis of rotation arm 9 is positioned. — S7

↓

Laser welding process is conducted by processing head 7. — S8

# FIG.3

# FIG.4

# FIG.5A

# FIG.5B

# FIG.6

# FIG.7A

# FIG.7B

# FIG.8A

# FIG.8B

# FIG.9

# FIG.10

# FIG.11

# FIG.12A

# FIG.12B

# FIG.13

# FIG.14

Data measured by magnetic distance sensor is received. — S11

Difference in distance between processing head and inner surface of nozzle stub is calculated. — S12

S13

Is distance difference within correctable range? — NO

YES

Interlock is activated and process of operation is suspended.

S14

S15

Is distance difference within range where corrections can be made only by adjustment mechanism? — NO

S16

YES

Corrections are made by push driving mechanism unit and adjustment mechanism.

S17

Corrections are made by adjustment mechanism.

Process of operation continues.

S18

# FIG.15

# FIG.16

Europäisches
Patentamt

European
Patent Office

Office européen
des brevets

## EUROPEAN SEARCH REPORT

Application Number

EP 11 15 4494

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 253 588 A1 (TRACEY STEPHEN [GB]; MOORE STANLEY ROBERT [GB]) 20 January 1988 (1988-01-20) | 1,5 | INV. F16L55/28 G21C17/017 |
| A | * column 8, paragraph 2 * ----- | 2-4,6 | |
| A | DE 40 24 926 A1 (OTTO SCHLEMMER GMBH [DE]) 13 February 1992 (1992-02-13) * column 6, paragraph 3 * ----- | 1-6 | |
| A | FR 2 866 258 A1 (FRAMATOME ANP [FR]) 19 August 2005 (2005-08-19) * abstract * ----- | 1-6 | |
| A | DE 197 03 315 A1 (SCHEIFF GMBH [DE]) 6 August 1998 (1998-08-06) * column 3, lines 40-69 * ----- | 1-6 | |

| TECHNICAL FIELDS SEARCHED (IPC) |
|---|
| F16L B23K G21C |

The present search report has been drawn up for all claims

| Place of search | Date of completion of the search | Examiner |
|---|---|---|
| Munich | 27 May 2011 | Dauvergne, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 11 15 4494

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2011

| Patent document cited in search report | | Publication date | Patent family member(s) | | Publication date |
|---|---|---|---|---|---|
| EP 0253588 | A1 | 20-01-1988 | AU | 7555587 A | 14-01-1988 |
| | | | US | 4982490 A | 08-01-1991 |
| DE 4024926 | A1 | 13-02-1992 | NONE | | |
| FR 2866258 | A1 | 19-08-2005 | NONE | | |
| DE 19703315 | A1 | 06-08-1998 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11304985 A